# EUROPEAN PATENT APPLICATION

(11) **EP 4 664 839 A1**
(43) Date of publication of application: **17.12.2025**
(21) Application number: 25171951.4
(22) Date of filing: 23.04.2025
(51) Int. Cl.: H04L 41/14

(54) **SUPPORTING ANALYTICS FOR AN ACCESS GATEWAY FUNCTION VIA A NETWORK DATA ANALYTICS FUNCTION**

(30) Priority: 13.06.2024 IN 202441045693; 26.03.2025 US 202519090762
(71) Applicant: Juniper Networks, Inc., Sunnyvale, CA 94089-1206 (US)
(72) Inventor: GIBBONS, John, Sunnyvale, 94089 (US); PADEBETTU, Venkatesh, Sunnyvale, 94089 (US)
(74) Representative: D Young & Co LLP

(57) **Abstract**

A network device may establish a first interface with a network data analytics function (NWDAF) of a service-based architecture (SBA), and may establish a second interface with Third Generation Partnership Project (3GPP) access devices and non-3GPP access devices. The network device may provide, to the NWDAF and via the first interface, definitions of analytics data to be generated by the NWDAF, and may provide, to the NWDAF and via the first interface, raw data of an operational state of the SBA to cause the NWDAF to calculate the analytics data based on the definitions and the raw data of an operational state. The network device may receive the analytics data from the NWDAF and via the first interface, and may perform one or more actions based on the analytics data.

## Description

### CROSS-REFERENCE TO RELATED APPLICATION

This Patent Application claims priority to India Provisional Patent Application No. 202441045693, filed on June 13, 2024, and entitled "SUPPORTING ANALYTICS FOR AN ACCESS GATEWAY FUNCTION VIA A NETWORK DATA ANALYTICS FUNCTION." The disclosure of the prior Application is considered part of and is incorporated by reference into this Patent Application.

### BACKGROUND

The Third Generation Partnership Project (3GPP) defines a service-based architecture (SBA) in which control plane functionality and common data repositories of a fifth-generation (5G) network are delivered through a set of interconnected network functions (NFs), with each NF being authorized to access services of other NFs.

### SUMMARY

Particular embodiments are set out in the independent claims. Various optional examples are set out in the dependent claims. Some implementations described herein relate to a method. The method may include establishing a first interface with a network data analytics function (NWDAF) of an SBA, and establishing a second interface with 3GPP access devices and non-3GPP access devices. The method may include providing, to the NWDAF and via the first interface, definitions of analytics data to be generated by the NWDAF, and providing, to the NWDAF and via the first interface, raw data of an operational state of the SBA to cause the NWDAF to calculate the analytics data based on the definitions and the raw data of an operational state. The method may include receiving the analytics data from the NWDAF and via the first interface, and performing one or more actions based on the analytics data.

Some implementations described herein relate to a network device. The network device may include one or more processors. The one or more processors may be configured to establish a first interface with an NWDAF of an SBA, wherein the first interface is an SBA application programming interface, and establish a second interface with 3GPP access devices and non-3GPP access devices. The one or more processors may be configured to provide, to the NWDAF and via the first interface, definitions of analytics data to be generated by the NWDAF, and provide, to the NWDAF and via the first interface, raw data of an operational state of the SBA to cause the NWDAF to calculate the analytics data based on the definitions and the raw data of an operational state. The one or more processors may be configured to receive the analytics data from the NWDAF and via the first interface, and perform one or more actions based on the analytics data.

Some implementations described herein relate to a non-transitory computer-readable medium that stores a set of instructions for a network device. The set of instructions, when executed by one or more processors of the network device, may cause the network device to establish a first interface with an NWDAF of an SBA, and establish a second interface with 3GPP access devices and non-3GPP access devices, wherein the second interface is a socket interface based on user datagram protocol/Internet protocol. The set of instructions, when executed by one or more processors of the network device, may cause the network device to provide, to the NWDAF and via the first interface, definitions of analytics data to be generated by the NWDAF, and provide, to the NWDAF and via the first interface, raw data of an operational state of the SBA to cause the NWDAF to calculate the analytics data based on the definitions and the raw data of an operational state. The set of instructions, when executed by one or more processors of the network device, may cause the network device to receive the analytics data from the NWDAF and via the first interface, and perform one or more actions based on the analytics data.

### BRIEF DESCRIPTION OF THE DRAWINGS

Figs. 1A-1D are diagrams of an example associated with supporting analytics for an access gateway function (AGF) via a network data analytics function (NWDAF).
Fig. 2 is a diagram of an example environment in which systems and/or methods described herein may be implemented.
Figs. 3 and 4 are diagrams of example components of one or more devices of Fig. 2.
Fig. 5 is a flowchart of an example process for supporting analytics for an AGF via an NWDAF.

### DETAILED DESCRIPTION

The following detailed description of example implementations refers to the accompanying drawings. The same reference numbers in different drawings may identify the same or similar elements.

An SBA provides a cloud-native service framework in which mobile core network functionalities (e.g., authentication, mobility management, and/or the like) are supported by NFs (e.g., self-contained software applications executed on hardware hosted by a cloud infrastructure). Interconnected on a logically shared infrastructure or a service bus, the NFs offer services accessible to any other authorized NF through application programming interfaces (APIs), such as service-based interfaces (SBI). Services exposed by an NF to another NF are described using API specifications that identify a set of accessible service data and indicate authorized operations for the service data. Since NFs are loosely coupled and interfaced with APIs, they can be easily deployed anywhere, on demand, without impacting other NFs. New services or service instances may be published in a centralized repository (e.g., a network repository function (NRF)). The services may be available to third-party applications through a dedicated NF (e.g., a network exposure function (NEF)). The NEF may provide secure APIs to external or internal applications for accessing the core network services and capabilities supported by the NFs.

A network data analytics function (NWDAF) is designed to streamline the way a core network data is produced and consumed, as well as to generate insights and take actions to enhance an end-user experience. The NWDAF is a centralized data collection and source for real-time operational intelligence about the NFs, and may unify multiple tools into a single, logically centralized, distributed analytics solution. The NWDAF may collect data from various NFs and application functions, operations, administration, and management (OAM) systems, operational support systems, and/or the like. The NWDAF acts as an analytics service for other NFs and for the OAM by deriving analytic insights from data (e.g., telemetry data, measures, reference data, and/or the like). Outputs of the NWDAF may be consumed by other NFs to enable a fast control loop for automation. In current SBAs, the NWDAF provides interfaces to all NFs.

Non-3GPP access devices may include a wireline access gateway function (W-AGF), a non-3GPP interworking function (N3IWF), a trusted non-3GPP gateway function (TNGF), a trusted wireless local area network (WLAN) interworking function (TWIF), and/or the like. Non-3GPP access devices and a radio access network (RAN) (e.g., a 3GPP access device) may interface with the 5G control plane only via N2 interfaces with an access and mobility management function (AMF). There is no direct interface for the non-3GPP and 3GPP access devices to the 5G control plane that provides any telemetry data to the NWDAF (e.g., for provision of analytics). The AMF is unaware of resources utilized by the non-3GPP and 3GPP access devices, which restricts analytics data exchanged between the AMF and the NWDAF. Thus, current techniques for supporting data analytics in an SBA consume computing resources (e.g., processing resources, memory resources, communication resources, and/or the like), networking resources, and/or the like, associated with failing to provide interfaces between the non-3GPP and 3GPP access devices and the NWDAF, failing to generate analytics associated with resource utilization by the non-3GPP and 3GPP access devices, providing poor user experiences based on failing to generate analytics associated with resource utilization by the non-3GPP and 3GPP access devices, and/or the like.

Some implementations described herein relate to a network device that supports analytics for an AGF (e.g., a non-3GPP access device and/or a 3GPP access device) via an NWDAF. For example, the network device (e.g., an access network data function (ANDF)) may establish a first interface with an NWDAF of an SBA, and may establish a second interface with 3GPP access devices and non-3GPP access devices. The network device may provide, to the NWDAF and via the first interface, definitions of analytics data to be generated by the NWDAF, and may provide, to the NWDAF and via the first interface, raw data of an operational state of the SBA to cause the NWDAF to calculate the analytics data based on the definitions and the raw data of an operational state. The network device may receive the analytics data from the NWDAF and via the first interface, and may perform one or more actions based on the analytics data.

In this way, the network device supports analytics for an AGF via an NWDAF. For example, the network device (e.g., an ANDF) may include an application function (AF) that utilizes the SBA to interface with the NWDAF (e.g., similarly to other NFs). The ANDF may define analytics data to be generated by the NWDAF based on use cases, and may provide the required data to the NWDAF for generation of the defined analytics data. The ANDF may provide an Nxx socket interface between each of the non-3GPP and 3GPP access devices and the ANDF. The Nxx socket interface may be based on user datagram protocol (UDP)/ Internet protocol (IP), and may be encrypted via datagram transport layer security (DTLS), transport layer security (TLS), and/or IP security (IPSec). Thus, the network device conserves computing resources, networking resources, and/or the like that would otherwise have been consumed by failing to provide interfaces between the non-3GPP and 3GPP access devices and the NWDAF, failing to generate analytics associated with resource utilization by the non-3GPP and 3GPP access devices, providing poor user experiences based on failing to generate analytics associated with resource utilization by the non-3GPP and 3GPP access devices, and/or the like.

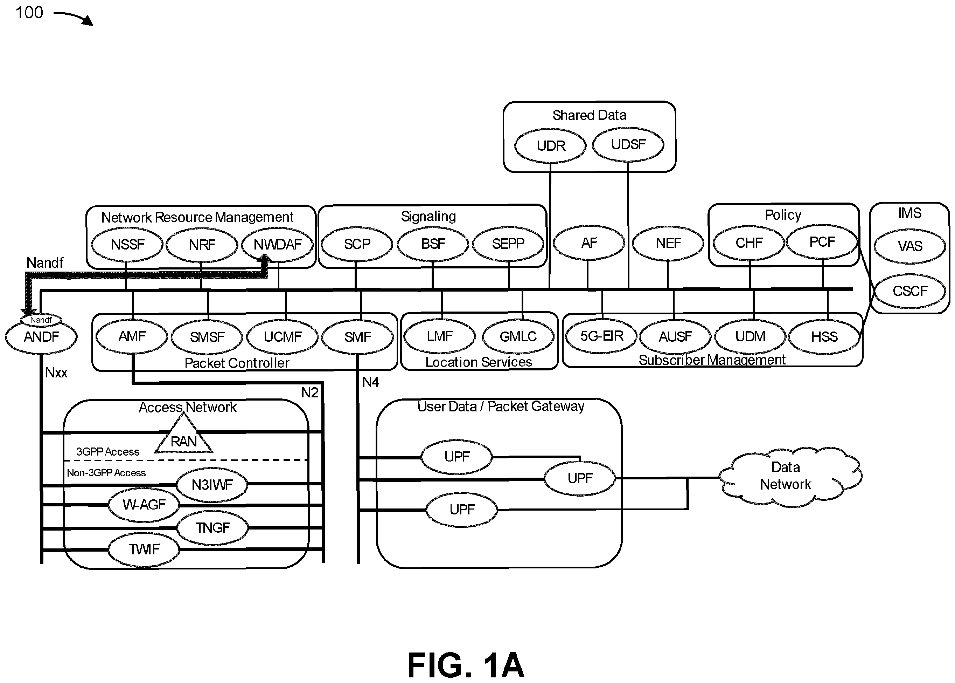

Figs. 1A-1D are diagrams of an example 100 associated with supporting analytics for an AGF via an NWDAF. As shown in Figs. 1A-1D, the example 100 (e.g., an example SBA) includes a unified data repository (UDR), an unstructured data storage function (UDSF), a network slice selection function (NSSF), a network repository function (NRF), an NWDAF, a service communication proxy (SCP), a binding support function (BSF), a security edge protection proxy (SEPP), an AF, an NEF, a charging function (CHF), a policy control function (PCF), a value-added service (VAS), a call session control function (CSCF), an ANDF, an AMF, a short message service function (SMSF), a user equipment capability management function (UCMF), a session management function (SMF), a location management function (LMF), a gateway mobile location center (GMLC), an equipment identity register (EIR), an authentication server function (AUSF), a unified data management (UDM), a home subscriber server (HSS), a RAN, a W-AGF, an N3IWF, a TNGF, a TWIF, and a user plane function (UPF). The UDR and the UDSF may provide shared data, the NSSF, the NRF, and the NWDAF may provide network resource management. The SCP, the BSF, and the SEPP may provide signaling, and the CHF and the PCF may provide policies. The VAS and the CSCF may be part of an IP multimedia subsystem (IMS); the RAN, the W-AGF, the N3IWF, the TNGF, and the TWIF may be part of an access network; and the UPFs may be part of a user data/packet gateway that connects to a data network. Further details of the UDR, the UDSF, the NSSF, the NRF, the NWDAF, the SCP, the BSF, the SEPP, the AF, the NEF, the CHF, the PCF, the VAS, the CSCF, the ANDF, the AMF, the SMSF, the UCMF, the SMF, the LMF, the GMLC, the EIR, the AUSF, the UDM, the HSS, the RAN, the W-AGF, the N3IWF, the TNGF, the TWIF, the UPF, and the data network are provided elsewhere herein.

The UDR may include a data structure (e.g., a database, a list, a table, and/or the like) that stores data grouped into distinct collections of subscription-related information, such as subscription data, policy data, structured data for exposure, application data, and/or the like. The UDSF may include a data structure that supports data storage (e.g., user equipment (UE) context data) for stateless network functions. The NSSF includes one or more devices that select network slice instances. By providing network slicing, the NSSF allows an operator to deploy multiple substantially independent end-to-end networks potentially with the same infrastructure. In some implementations, each slice may be customized for different services.

The NRF may include a data structure that provides a centralized repository for all NFs, and that allows the NFs to register and discover each other. The NWDAF may include a centralized data collection and source for real-time operational intelligence about NFs, and may collect data from various NFs and application functions, OAM systems, operational support systems, and/or the like. The SCP may include a NF that enables dynamic scaling and management of communication and services in the SBA. The BSF may include one or more devices that allow the PCF to register, update, and remove binding information, and that allow NF consumers to discover a PCF. The SEPP may include one or more devices that enable secure interconnect between 5G networks. The SEPP may ensure end-to-end confidentiality and/or integrity between source and destination networks for all 5G interconnect roaming messages.

The AF may include one or more devices that support application influence on traffic routing, access to the NEF, policy control, and/or the like. The NEF may include one or more devices that support exposure of capabilities and/or events in the wireless telecommunications system to help other entities in the wireless telecommunications system discover network services. The CHF may include one or more devices that provide convergent online and offline charging for services. The PCF may include one or more devices that provide a policy framework that incorporates network slicing, roaming, packet processing, and/or mobility management, among other examples. The VAS may include one or more devices that provide services to customers beyond core services provided by the SBA. The CSCF may include one or more devices that conduct registration and session control for registered UEs, and that provide UE network location information at the HSS.

The ANDF may include one or more devices that utilize the SBA to interface with the NWDAF. The ANDF may define analytics data to be generated by the NWDAF based on use cases, and may provide the required data to the NWDAF for generation of the defined analytics data. The ANDF may provide an Nxx socket interface between each of the non-3GPP and 3GPP access devices and the ANDF. The Nxx socket interface may be based on UDP/IP and may be encrypted via DTLS, TLS, and/or IPSec. The AMF may include one or more devices that act as a termination point for non-access stratum (NAS) signaling and/or mobility management, among other examples. The SMSF may include one or more devices that transmit short message service (SMS) messages between users and devices in the SBA and those in other networks.

The UCMF may include one or more devices that store a capability dictionary of connected UEs and provide this information to other NFs. The SMF may include one or more devices that support the establishment, modification, and release of communication sessions in the wireless telecommunications system. For example, the SMF may configure traffic steering policies at the UPF and/or may enforce user equipment IP address allocation and policies, among other examples. The LMF may include one or more devices that provide positioning functionality to determine a geographic position of a UE based on downlink and uplink location measuring radio signals. The GMLC may include one or more devices that provide functionality required to support location-based services (LBS).

The EIR may include one or more devices that support checking of a status of a UE's identity (e.g., to check where the UE is blacklisted). The AUSF may include one or more devices that act as an authentication server and support the process of authenticating a UE in the wireless telecommunications system. The UDM may include one or more devices that store user data and profiles in the wireless telecommunications system. The UDM device may be used for fixed access and/or mobile access in a core network. The HSS may include a data structure that stores information associated with network subscribers. The RAN may support, for example, a cellular radio access technology (RAT), and may include one or more base stations and other network entities that can support wireless communication for a UE.

The W-AGF may include one or more devices that act like the RAN and that relay data traffic between a routing gateway and the UPF. The N3IWF may include one or more devices that act as a gateway for the SBA, and that provide a secure connection for a UE accessing the SBA over a non-3GPP access network. The TNGF may include one or more devices that provide trusted access to the SBA from a non-3GPP access network. The TWIF may include one or more devices that provide trusted access to the SBA from a non-3GPP access network. The UPF may include one or more devices that serve as an anchor point for intraRAT and/or interRAT mobility. The UPF may apply rules to packets, such as rules pertaining to packet routing, traffic reporting, and/or handling user plane quality-of-service (QoS), among other examples.

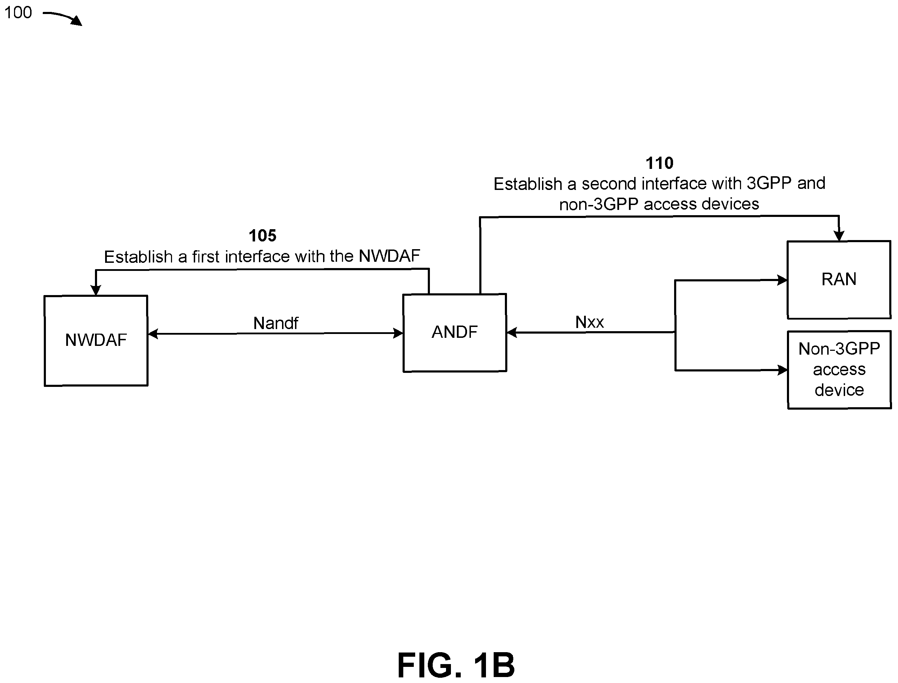

As shown in Fig. 1B, and by reference number 105, the ANDF may establish a first interface with the NWDAF. For example, the ANDF may be a new NF or AF that utilizes the SBA to interface with the NWDAF like other NFs. In some implementations, a first interface (e.g., an SBA API referred to as an N_{ANDF} interface) may be defined for NFs (e.g., including the NWDAF) to interface with the ANDF for both delivery and access of analytics data. The N_{ANDF} interface may also interface with the NEF for secure communication between NFs.

As further shown in Fig. 1B, and by reference number 110, the ANDF may establish a second interface with 3GPP access devices and non-3GPP access devices. For example, a second interface (e.g., an Nxx socket interface) may be provided between the ANDF and the 3GPP access devices and the non-3GPP access devices (e.g., the RAN, the W-AGF, the N3IWF, the TNGF, the TWIF, and/or the like). The Nxx socket interface may be based on UDP/IP. The ANDF may utilize the second interface to receive telemetry data from the 3GPP access devices and the non-3GPP access devices, as described below.

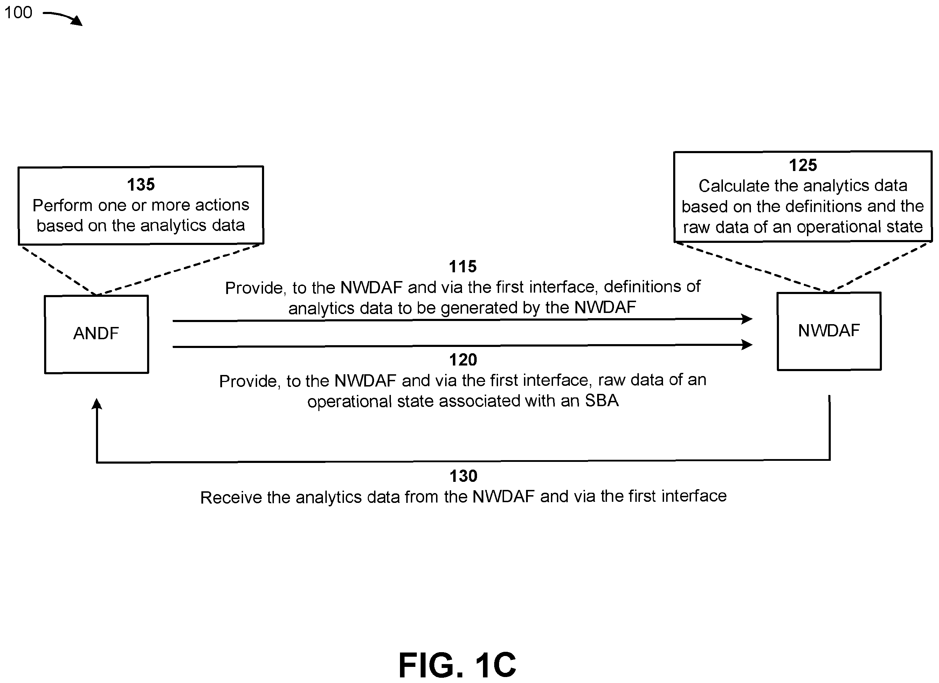

As shown in Fig. 1C, and by reference number 115, the ANDF may provide, to the NWDAF and via the first interface, definitions of analytics data to be generated by the NWDAF. For example, the ANDF may define analytics data to be generated by the NWDAF based on use cases associated with the SBA, and may generate definitions for the analytics data. In some implementations, the definitions may define analytics data, such as network data analytics data, network function load analytics data, network performance analytics data, UE related analytics data, congestion analytics data, quality of service (QoS) sustainability analytics data, session management congestion experience analytics data, redundant transmission experience related analytics data, end-to-end data volume transfer time analytics data, protocol data unit (PDU) session traffic analytics data, and/or the like. In some implementations, the ANDF may utilize the first interface to provide the definitions of the analytics data to the NWDAF.

As further shown in Fig. 1C, and by reference number 120, the ANDF may provide, to the NWDAF and via the first interface, raw data of an operational state (e.g., SBA data) associated with an SBA. For example, the ANDF may receive raw data of an operational state from the components of the SBA. In some implementations the raw data of an operational state may include network data, network function loads, network performance data, UE related data, congestion data, QoS sustainability data, session management congestion experience data, redundant transmission experience related data, end-to-end data volume transfer time data, PDU session traffic data, and/or the like. The ANDF may utilize the first interface to provide the raw data of an operational state to the NWDAF. The NWDAF may utilize the raw data of an operational state to generate the defined analytics data.

As further shown in Fig. 1C, and by reference number 125, the NWDAF may calculate the analytics data based on the definitions and the raw data of an operational state. For example, the NWDAF may also receive data from OAM systems, operational support systems, and/or the like. The NWDAF may process the raw data of an operational state, and any additional data, to calculate the analytics data defined by the definitions. In some implementations, the NWDAF may calculate service experience related network data analytics data (e.g., application, network slice, UE, and/or the like), NF load analytics data, network performance analytics data, UE related analytics data (e.g., mobility, communication, behavior related, abnormal behavior related, and/or the like), user congestion analytics data, QoS sustainability analytics data, session management congestion experience analytics data, redundant transmission experience related analytics data, data network performance analytics data, end-to-end data volume transfer time analytics data, PDU session traffic analytics data, and/or the like.

As further shown in Fig. 1C, and by reference number 130, the ANDF may receive the analytics data from the NWDAF and via the first interface. For example, after calculating the analytics data, the NWDAF may utilize the first interface to provide the analytics data to the ANDF. The ANDF may receive the analytics data via the first interface, and may store the analytics data in a data structure (e.g., a database, a table, a list, and/or the like) associated with the ANDF.

As further shown in Fig. 1C, and by reference number 135, the ANDF may perform one or more actions based on the analytics data. For example, the ANDF may review the analytics data, and may determine the one or more actions to perform based on reviewing the analytics data. The ANDF may cause the one or more actions to be performed in the SBA. In some implementations, performing the one or more actions may include the ANDF calculating a service experience. For example, the ANDF may determine, based on the analytics data, that a poor service experience is provided to a UE by a network function of the SBA. The ANDF may identify a solution for the poor service experience, and may cause the network function to implement the solution.

In some implementations, performing the one or more actions may include the ANDF adjusting a load on a network function. For example, the ANDF may determine, based on the analytics data, that a load on a network function is too large, and may instruct the network function to provide some of the load to another network function. In some implementations, performing the one or more actions may include the ANDF correcting a network performance issue. For example, the ANDF may determine, based on the analytics data, that a network function is causing the network performance issue. The ANDF may cause the network function to be serviced or replaced in order to resolve the network performance issue. In some implementations, performing the one or more actions may include the ANDF correcting a UE performance issue. For example, the ANDF may identify UE performance issue based on the analytics data, and may provide a software update to the UE to resolve the UE performance issue.

In some implementations, performing the one or more actions may include the ANDF handling network congestion. For example, based on the analytics data, the ANDF may identify a portion of the SBA that is experiencing network congestion, and may cause traffic to be diverted away from the portion of the SBA. In some implementations, performing the one or more actions may include the ANDF addressing a QoS sustainability issue. For example, the ANDF may determine, based on the analytics data, that the RAN is causing the QoS sustainability issue, and may cause the RAN to be serviced in order to resolve the QoS sustainability issue. In some implementations, performing the one or more actions may include the ANDF handling session management congestion. For example, based on the analytics data, the ANDF may identify a portion of the SBA that is causing the session management congestion, and may cause traffic to be diverted away from the portion of the SBA.

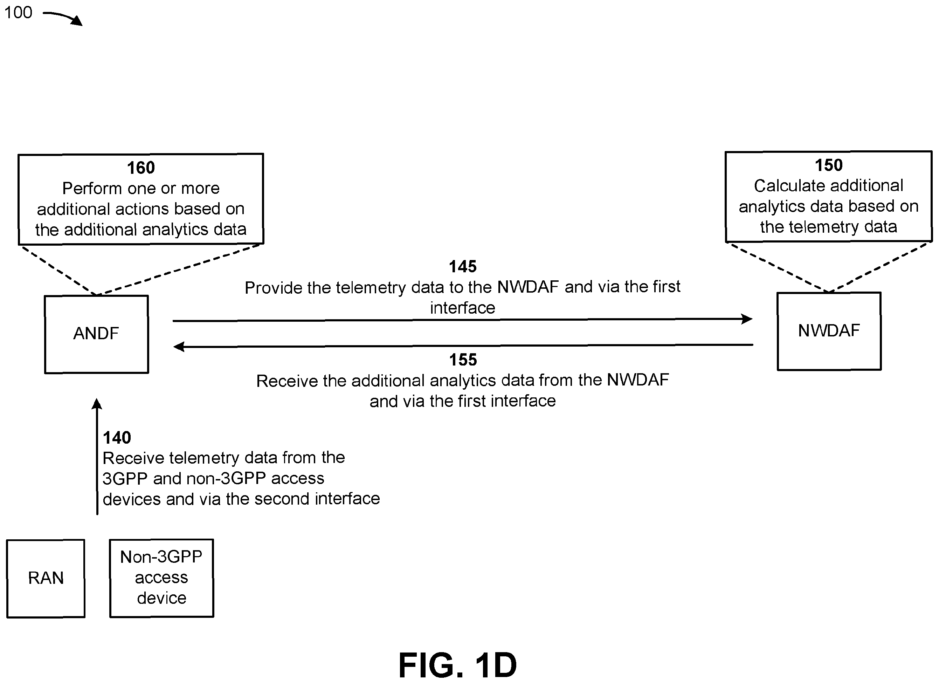

As shown in Fig. 1D, and by reference number 140, the ANDF may receive telemetry data from the 3GPP access devices and the non-3GPP access devices via the second interface. For example, the 3GPP access devices and the non-3GPP access devices may generate telemetry data and may provide the telemetry data to the ANDF via the second interface (e.g., the Nxx socket interface). The ANDF may receive the telemetry data via the second interface. In some implementations, the telemetry data may be generated as protocol buffer structured messages, and a data model (e.g., an OpenConfig data model) may generate the telemetry data as the structured messages in a universal key/value format. In some implementations, remote procedure calls (e.g., RPCs) may be utilized to provision sensors and to subscribe to and receive the telemetry data from the 3GPP access devices and the non-3GPP access devices. In some implementations, when receiving the telemetry data, the ANDF may receive the telemetry data in bulk from the 3GPP access devices and the non-3GPP access devices, may receive the telemetry data in chunks from the 3GPP access devices and the non-3GPP access devices, may periodically receive portions of the telemetry data from one or more of the 3GPP access devices and the non-3GPP access devices, and/or the like.

As further shown in Fig. 1D, and by reference number 145, the ANDF may provide the telemetry data to the NWDAF and via the first interface. For example, when the ANDF receives the telemetry data from the 3GPP access devices and the non-3GPP access devices, the ANDF may utilize the first interface to provide the telemetry data to the NWDAF. The NWDAF may utilize the telemetry data to generate additional analytics data, as described below.

As further shown in Fig. 1D, and by reference number 150, the NWDAF may calculate additional analytics data based on the telemetry data. For example, the NWDAF may process the telemetry data, and any additional data, to calculate the additional analytics data. In some implementations, the additional analytics data may include service experience related network data analytics data (e.g., application, network slice, UE, and/or the like), NF load analytics data, network performance analytics data, UE related analytics data (e.g., mobility, communication, behavior related, abnormal behavior related, and/or the like), user congestion analytics data, QoS sustainability analytics data, session management congestion experience analytics data, redundant transmission experience related analytics data, data network performance analytics data, end-to-end data volume transfer time analytics data, PDU session traffic analytics data, and/or the like.

As further shown in Fig. 1D, and by reference number 155, the ANDF may receive the additional analytics data from the NWDAF and via the first interface. For example, after calculating the additional analytics data, the NWDAF may utilize the first interface to provide the additional analytics data to the ANDF. The ANDF may receive the additional analytics data via the first interface, and may store the additional analytics data in a data structure associated with the ANDF.

As further shown in Fig. 1D, and by reference number 160, the ANDF may perform one or more additional actions based on the additional analytics data. For example, the ANDF may review the additional analytics data, and may determine the one or more additional actions to perform based on reviewing the additional analytics data. The ANDF may cause the one or more additional actions to be performed in the SBA. In some implementations, the one or more additional actions may include actions similar to actions performed based on the analytics data. In some implementations, the one or more additional actions may include actions to address any issues of the 3GPP access devices and the non-3GPP access devices, as identified from the telemetry data received from the 3GPP access devices and the non-3GPP access devices. For example, the ANDF may determine, based on the additional analytics data, that the RAN is overloaded with traffic, and may cause the RAN to offload some of the traffic to another RAN. In another example, the ANDF may determine, based on the additional analytics data, that a non-3GPP access device is offline, and may cause a technician to be dispatched to handle the offline non-3GPP access device.

In this way, the network device supports analytics for an AGF via an NWDAF. For example, the network device (e.g., an ANDF) may include an AF that utilizes the SBA to interface with the NWDAF (e.g., similarly to other NFs). The ANDF may define analytics data to be generated by the NWDAF based on use cases, and may provide the required data to the NWDAF for generation of the defined analytics data. The ANDF may provide an Nxx socket interface between each of the non-3GPP and 3GPP access devices and the ANDF. The Nxx socket interface may be based on UDP/IP. Thus, the network device conserves computing resources, networking resources, and/or the like that would otherwise have been consumed by failing to provide interfaces between the non-3GPP and 3GPP access devices and the NWDAF, failing to generate analytics associated with resource utilization by the non-3GPP and 3GPP access devices, providing poor user experiences based on failing to generate analytics associated with resource utilization by the non-3GPP and 3GPP access devices, and/or the like.

As indicated above, Figs. 1A-1D are provided as an example. Other examples may differ from what is described with regard to Figs. 1A-1D. The number and arrangement of devices shown in Figs. 1A-1D are provided as an example. In practice, there may be additional devices, fewer devices, different devices, or differently arranged devices than those shown in Figs. 1A-1D. Furthermore, two or more devices shown in Figs. 1A-1D may be implemented within a single device, or a single device shown in Figs. 1A-1D may be implemented as multiple, distributed devices. Additionally, or alternatively, a set of devices (e.g., one or more devices) shown in Figs. 1A-1D may perform one or more functions described as being performed by another set of devices shown in Figs. 1A-1D.

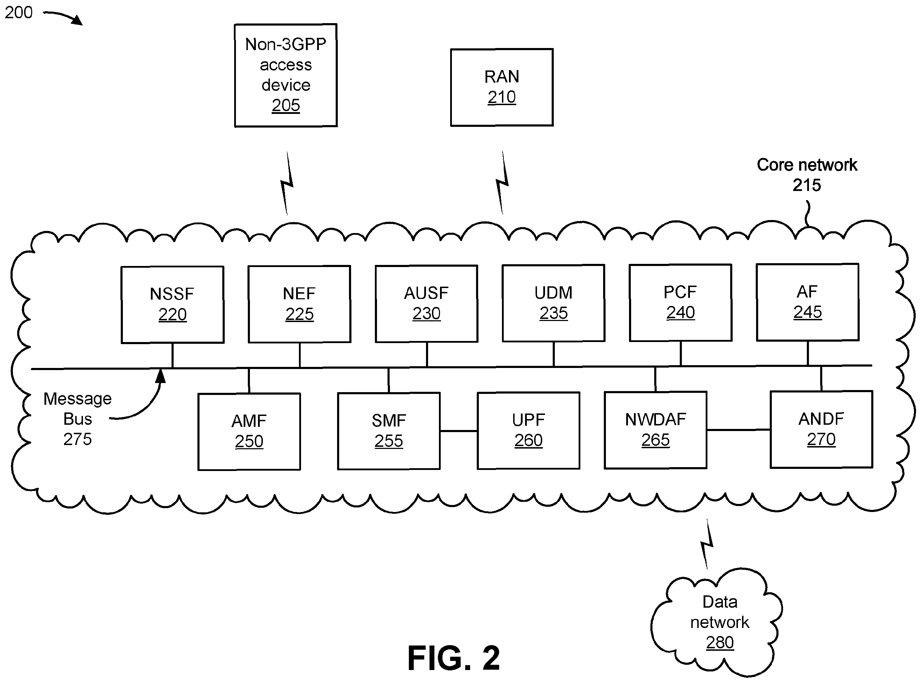

Fig. 2 is a diagram of an example environment 200 in which systems and/or methods described herein may be implemented. As shown in Fig. 2, the example environment 200 may include a non-3GPP access device 205, a RAN 210, a core network 215, and a data network 280. Devices and/or networks of the example environment 200 may interconnect via wired connections, wireless connections, or a combination of wired and wireless connections.

The non-3GPP access device 205 may include one or more devices that access the core network 215 via Wi-Fi, WiMAX, and/or the like. For example, the non-3GPP access device 205 may include a wireline access gateway function (W-AGF), a non-3GPP interworking function (N3IWF), a trusted non-3GPP gateway function (TNGF), a trusted wireless local area network (WLAN) interworking function (TWIF), and/or the like.

The RAN 210 may support, for example, a cellular RAT. The RAN 210 may include one or more base stations (e.g., base transceiver stations, radio base stations, node Bs, eNodeBs (eNBs), gNodeBs (gNBs), base station subsystems, cellular sites, cellular towers, access points, transmit receive points (TRPs), radio access nodes, macrocell base stations, microcell base stations, picocell base stations, femtocell base stations, or similar types of devices) and other network entities that can support wireless communication for a UE. The RAN 210 may transfer traffic between a UE (e.g., using a cellular RAT), one or more base stations (e.g., using a wireless interface or a backhaul interface, such as a wired backhaul interface), and/or the core network 215. The RAN 210 may provide one or more cells that cover geographic areas.

In some implementations, the RAN 210 may perform scheduling and/or resource management for a UE covered by the RAN 210 (e.g., a UE covered by a cell provided by the RAN 210). In some implementations, the RAN 210 may be controlled or coordinated by a network controller, which may perform load balancing, network-level configuration, and/or other operations. The network controller may communicate with the RAN 210 via a wireless or wireline backhaul. In some implementations, the RAN 210 may include a network controller, a self-organizing network (SON) module or component, or a similar module or component. In other words, the RAN 210 may perform network control, scheduling, and/or network management functions (e.g., for uplink, downlink, and/or sidelink communications of a UE covered by the RAN 210).

In some implementations, the core network 215 may include an example functional architecture in which systems and/or methods described herein may be implemented. For example, the core network 215 may include an example architecture of a 5G next generation (NG) core network included in a 5G wireless telecommunications system. While the example architecture of the core network 215 shown in Fig. 2 may be an example of a service-based architecture, in some implementations, the core network 215 may be implemented as a reference-point architecture and/or a 4G core network, among other examples.

As shown in Fig. 2, the core network 215 may include a number of functional elements. The functional elements may include, for example, a network slice selection function (NSSF) 220, an NEF 225, an authentication server function (AUSF) 230, a UDM device 235, a PCF 240, an AF 245, an AMF 250, an SMF 255, a UPF 260, an NWDAF 265, and/or an ANDF 270. These functional elements may be communicatively connected via a message bus 275. Each of the functional elements shown in Fig. 2 is implemented on one or more devices associated with a wireless telecommunications system. In some implementations, one or more of the functional elements may be implemented on physical devices, such as an access point, a base station, and/or a gateway. In some implementations, one or more of the functional elements may be implemented on a computing device of a cloud computing environment.

The NSSF 220 includes one or more devices that select network slice instances for a UE. By providing network slicing, the NSSF 220 allows an operator to deploy multiple substantially independent end-to-end networks potentially with the same infrastructure. In some implementations, each slice may be customized for different services.

The NEF 225 includes one or more devices that support exposure of capabilities and/or events in the wireless telecommunications system to help other entities in the wireless telecommunications system discover network services.

The AUSF 230 includes one or more devices that act as an authentication server and support the process of authenticating a UE in the wireless telecommunications system.

The UDM device 235 includes one or more devices that store user data and profiles in the wireless telecommunications system. The UDM device 235 may be used for fixed access and/or mobile access in the core network 215.

The PCF 240 includes one or more devices that provide a policy framework that incorporates network slicing, roaming, packet processing, and/or mobility management, among other examples.

The AF 245 includes one or more devices that support application influence on traffic routing, access to the NEF 225, and/or policy control, among other examples.

The AMF 250 includes one or more devices that act as a termination point for non-access stratum (NAS) signaling and/or mobility management, among other examples.

The SMF 255 includes one or more devices that support the establishment, modification, and release of communication sessions in the wireless telecommunications system. For example, the SMF 255 may configure traffic steering policies at the UPF 260 and/or may enforce user equipment IP address allocation and policies, among other examples.

The UPF 260 includes one or more devices that serve as an anchor point for intraRAT and/or interRAT mobility. The UPF 260 may apply rules to packets, such as rules pertaining to packet routing, traffic reporting, and/or handling user plane QoS, among other examples.

The NWDAF 265 includes one or more devices that collect data from UEs, network functions, operations, administration, and maintenance (OAM) systems, and/or the like from the core network 215, a cloud computing environment, edge networks, and/or the like, and that utilize the data for analytics.

The ANDF 270 includes one or more devices that support analytics for an AGF (e.g., the non-3GPP access device 205 and/or the RAN 210) generated by the NWDAF 265.

The message bus 275 represents a communication structure for communication among the functional elements. In other words, the message bus 275 may permit communication between two or more functional elements.

The data network 280 includes one or more wired and/or wireless data networks. For example, the data network 280 may include an IP Multimedia Subsystem (IMS), a public land mobile network (PLMN), a local area network (LAN), a wide area network (WAN), a metropolitan area network (MAN), a private network such as a corporate intranet, an ad hoc network, the Internet, a fiber optic-based network, a cloud computing network, a third-party services network, an operator services network, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the example environment 200 may perform one or more functions described as being performed by another set of devices of the example environment 200.

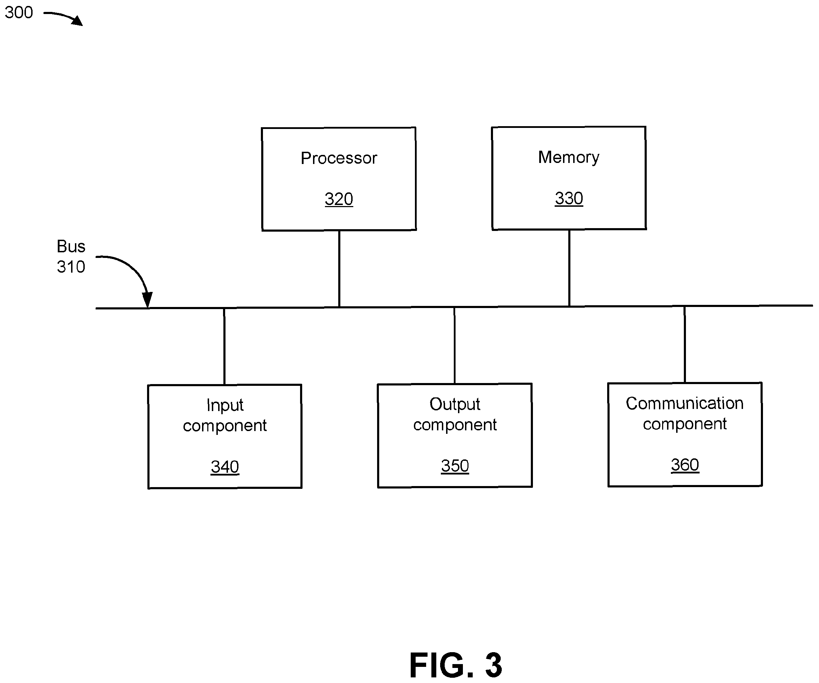

Fig. 3 is a diagram of example components of a device 300, which may correspond to the non-3GPP access device 205, the RAN 210, the NSSF 220, the NEF 225, the AUSF 230, the UDM device 235, the PCF 240, the AF 245, the AMF 250, the SMF 255, the UPF 260, the NWDAF 265, and/or the ANDF 270. In some implementations, the non-3GPP access device 205, the RAN 210, the NSSF 220, the NEF 225, the AUSF 230, the UDM device 235, the PCF 240, the AF 245, the AMF 250, the SMF 255, the UPF 260, the NWDAF 265, and/or the ANDF 270 may include one or more devices 300 and/or one or more components of the device 300. As shown in Fig. 3, the device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), an accelerated processing unit (APU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. Memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

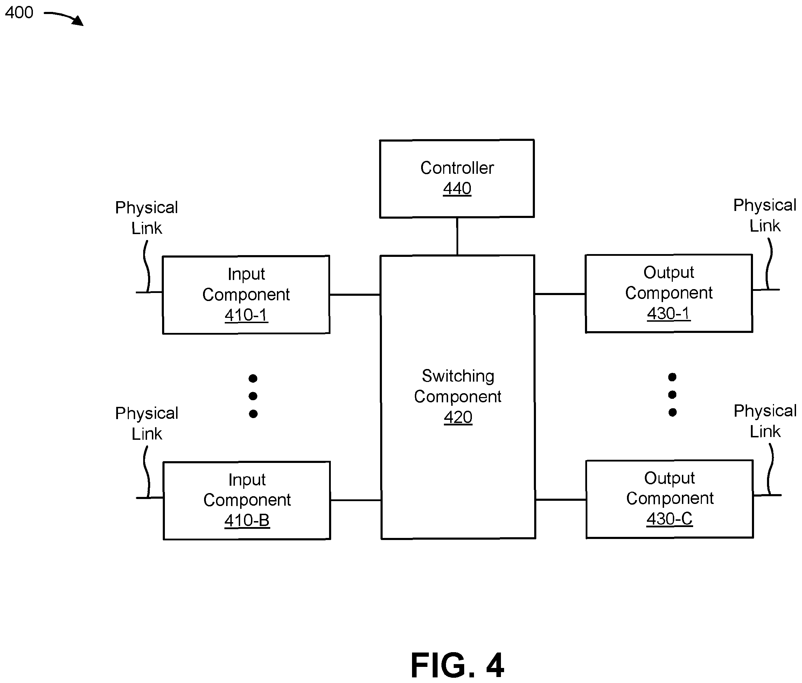

Fig. 4 is a diagram of example components of one or more devices of Fig. 2. The example components may be included in a device 400. The device 400 may correspond to the non-3GPP access device 205 and/or the ANDF 270. In some implementations, the non-3GPP access device 205 and/or the ANDF 270 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions stored by a non-transitory computer-readable medium. A computer-readable medium is defined herein as a non-transitory memory device. A memory device includes memory space within a single physical storage device or memory space spread across multiple physical storage devices.

Software instructions may be read into a memory and/or storage component associated with the controller 440 from another computer-readable medium or from another device via a communication component. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

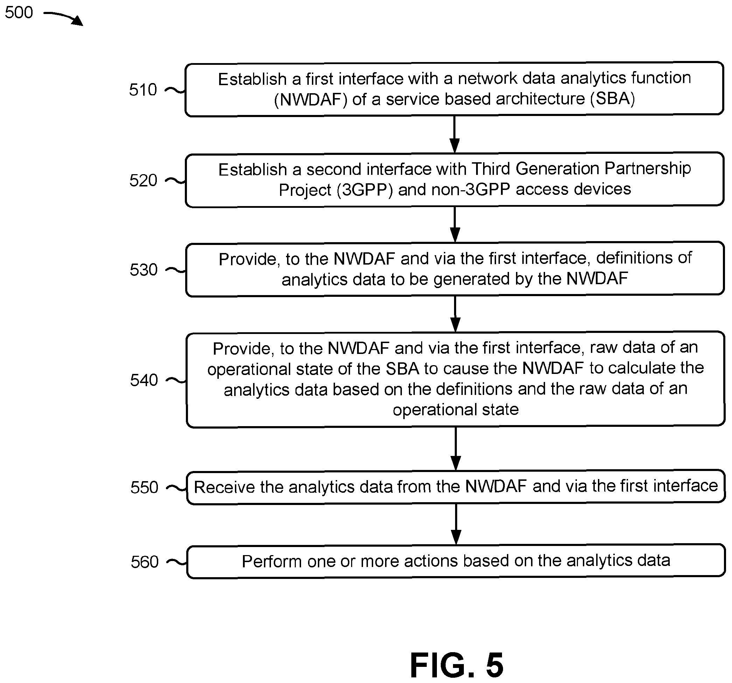

Fig. 5 is a flowchart of an example process 500 for supporting analytics for an AGF via an NWDAF. In some implementations, one or more process blocks of Fig. 5 may be performed by a network device (e.g., the ANDF 270). In some implementations, one or more process blocks of Fig. 5 may be performed by another device or a group of devices separate from or including the network device, such as a non-3GPP access device (e.g., the non-3GPP access device 205), a RAN (e.g., the RAN 210), and/or the like. Additionally, or alternatively, one or more process blocks of Fig. 5 may be performed by one or more components of the device 300, such as the processor 320, the memory 330, the input component 340, the output component 350, and/or the communication component 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include establishing a first interface with an NWDAF of an SBA (block 510). For example, the network device may establish a first interface with an NWDAF of an SBA, as described above. In some implementations, the first interface is an SBA application programming interface. In some implementations, the network device is an ANDF.

As further shown in Fig. 5, process 500 may include establishing a second interface with 3GPP access devices and non-3GPP access devices (block 520). For example, the network device may establish a second interface with 3GPP access devices and non-3GPP access devices, as described above. In some implementations, the second interface is a socket interface based on user datagram protocol/Internet protocol. In some implementations, the 3GPP access devices and the non-3GPP access devices include one or more of a RAN, a W-AGF, an N3IWF, a TNGF, or a TWIF.

As further shown in Fig. 5, process 500 may include providing, to the NWDAF and via the first interface, definitions of analytics data to be generated by the NWDAF (block 530). For example, the network device may provide, to the NWDAF and via the first interface, definitions of analytics data to be generated by the NWDAF, as described above. In some implementations, the analytics data includes one or more of network data analytics data, network function load analytics data, networking performance analytics data, user equipment related analytics data, congestion analytics data, quality of service sustainability analytics data, session management congestion experience analytics data, redundant transmission experience related analytics data, ending-to-end data volume transfer time analytics data, or protocol data unit session traffic analytics data. In some implementations, the definitions of analytics data are based on use cases associated with the SBA.

As further shown in Fig. 5, process 500 may include providing, to the NWDAF and via the first interface, raw data of an operational state of the SBA to cause the NWDAF to calculate the analytics data based on the definitions and the raw data of an operational state (block 540). For example, the network device may provide, to the NWDAF and via the first interface, raw data of an operational state of the SBA to cause the NWDAF to calculate the analytics data based on the definitions and the raw data of an operational state, as described above.

As further shown in Fig. 5, process 500 may include receiving the analytics data from the NWDAF and via the first interface (block 550). For example, the network device may receive the analytics data from the NWDAF and via the first interface, as described above.

As further shown in Fig. 5, process 500 may include performing one or more actions based on the analytics data (block 560). For example, the network device may perform one or more actions based on the analytics data, as described above. In some implementations, performing the one or more actions includes one or more of calculating a service experience, adjusting a load on a network function, correcting a network performance issue, correcting a user equipment performance issue, handling network congestion, addressing a quality of service sustainability issue, or handling session management congestion.

In some implementations, process 500 includes receiving telemetry data from the 3GPP access devices and the non-3GPP access devices via the second interface, providing the telemetry data to the NWDAF and via the first interface to cause the NWDAF to calculate additional analytics data based on the telemetry data, receiving the additional analytics data from the NWDAF and via the first interface, and performing one or more additional actions based on the additional analytics data. In some implementations, the telemetry data includes protocol buffer structured messages in a universal key/value format. In some implementations, receiving the telemetry data from the 3GPP access devices and the non-3GPP access devices includes one of receiving the telemetry data in bulk from the 3GPP access devices and the non-3GPP access devices, receiving the telemetry data in chunks from the 3GPP access devices and the non-3GPP access devices, or periodically receiving portions of the telemetry data from one or more of the 3GPP access devices and the non-3GPP access devices.

In some implementations, the additional analytics data includes one or more of network data analytics data, network function load analytics data, networking performance analytics data, user equipment related analytics data, congestion analytics data, quality of service sustainability analytics data, session management congestion experience analytics data, redundant transmission experience related analytics data, ending-to-end data volume transfer time analytics data, or protocol data unit session traffic analytics data. In some implementations, process 500 includes establishing the first interface with an NEF of the SBA.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Thus, from one perspective, there has now been described a network device may establish a first interface with a network data analytics function (NWDAF) of a service-based architecture (SBA), and may establish a second interface with Third Generation Partnership Project (3GPP) access devices and non-3GPP access devices. The network device may provide, to the NWDAF and via the first interface, definitions of analytics data to be generated by the NWDAF, and may provide, to the NWDAF and via the first interface, raw data of an operational state of the SBA to cause the NWDAF to calculate the analytics data based on the definitions and the raw data of an operational state. The network device may receive the analytics data from the NWDAF and via the first interface, and may perform one or more actions based on the analytics data.

Further examples of feature combinations taught by the present disclosure are set out in the following numbered clauses:
1. A method, comprising:
   establishing, by a network device, a first interface with a network data analytics function (NWDAF) of a service-based architecture (SBA);
   establishing, by the network device, a second interface with Third Generation Partnership Project (3GPP) access devices and non-3GPP access devices;
   providing, by the network device, to the NWDAF, and via the first interface, definitions of analytics data to be generated by the NWDAF;
   providing, by the network device, to the NWDAF, and via the first interface, raw data of an operational state of the SBA to cause the NWDAF to calculate the analytics data based on the definitions and the raw data of an operational state;
   receiving, by the network device, the analytics data from the NWDAF and via the first interface; and
   performing, by the network device, one or more actions based on the analytics data.
2. The method of clause 1, further comprising:
   receiving telemetry data from the 3GPP access devices and the non-3GPP access devices via the second interface;
   providing the telemetry data to the NWDAF and via the first interface to cause the NWDAF to calculate additional analytics data based on the telemetry data;
   receiving the additional analytics data from the NWDAF and via the first interface; and
   performing one or more additional actions based on the additional analytics data.
3. The method of clause 2, wherein the telemetry data includes protocol buffer structured messages in a universal key/value format.
4. The method of clause 2 or 3, wherein receiving the telemetry data from the 3GPP access devices and the non-3GPP access devices comprises one of:
   receiving the telemetry data in bulk from the 3GPP access devices and the non-3GPP access devices;
   receiving the telemetry data in chunks from the 3GPP access devices and the non-3GPP access devices; or
   periodically receiving portions of the telemetry data from one or more of the 3GPP access devices and the non-3GPP access devices.
5. The method of clause 2, 3 or 4, wherein the additional analytics data includes one or more of:
   network data analytics data,
   network function load analytics data,
   network performance analytics data,
   user equipment related analytics data,
   congestion analytics data,
   quality of service sustainability analytics data,
   session management congestion experience analytics data,
   redundant transmission experience related analytics data,
   end-to-end data volume transfer time analytics data, or
   protocol data unit session traffic analytics data.
6. The method of any preceding clause, wherein the first interface is an SBA application programming interface.
7. The method of any preceding clause, further comprising:
   establishing the first interface with a network exposure function of the SBA.
8. A network device, comprising:
   one or more memories; and
   one or more processors to:
      establish a first interface with a network data analytics function (NWDAF) of a service-based architecture (SBA),
         wherein the first interface is an SBA application programming interface;
      establish a second interface with Third Generation Partnership Project (3GPP) access devices and non-3GPP access devices;
      provide to the NWDAF, and via the first interface, definitions of analytics data to be generated by the NWDAF;
      provide to the NWDAF, and via the first interface, raw data of an operational state of the SBA to cause the NWDAF to calculate the analytics data based on the definitions and the raw data of an operational state;
      receive the analytics data from the NWDAF and via the first interface; and perform one or more actions based on the analytics data.
9. The network device of clause 8, wherein the second interface is a socket interface based on user datagram protocol/Internet protocol.
10. The network device of clause 8 or 9, wherein the 3GPP access devices and the non-3GPP access devices include one or more of:
   a radio access network,
   a wireline access gateway function,
   a non-3GPP interworking function,
   a trusted non-3GPP gateway function, or
   a trusted wireless local area network interworking function.
11. The network device of clause 8, 9 or 10, wherein the analytics data includes one or more of:
   network data analytics data,
   network function load analytics data,
   network performance analytics data,
   user equipment related analytics data,
   congestion analytics data,
   quality of service sustainability analytics data,
   session management congestion experience analytics data,
   redundant transmission experience related analytics data,
   end-to-end data volume transfer time analytics data, or
   protocol data unit session traffic analytics data.
12. The network device of any of clauses 8 to 11, wherein the one or more processors, to perform the one or more actions, are to one or more of:
   calculate a service experience;
   adjust a load on a network function;
   correct a network performance issue,
   correct a user equipment performance issue,
   handle network congestion,
   address a quality of service sustainability issue, or
   handle session management congestion.
13. The network device of any of clauses 8 to 12, wherein the network device is an access network data function.
14. The network device of any of clauses 8 to 13, wherein the definitions of analytics data are based on use cases associated with the SBA.
15. A computer-readable medium storing a set of instructions, the set of instructions comprising:
   one or more instructions that, when executed by one or more processors of a network device, cause the network device to:
   establish a first interface with a network data analytics function (NWDAF) of a service-based architecture (SBA);
   establish a second interface with Third Generation Partnership Project (3GPP) access devices and non-3GPP access devices,
      wherein the second interface is a socket interface based on user datagram protocol/Internet protocol;
   provide to the NWDAF, and via the first interface, definitions of analytics data to be generated by the NWDAF;
   provide to the NWDAF, and via the first interface, raw data of an operational state of the SBA to cause the NWDAF to calculate the analytics data based on the definitions and the raw data of an operational state;
   receive the analytics data from the NWDAF and via the first interface; and
   perform one or more actions based on the analytics data.
16. The computer-readable medium of clause 15, wherein the one or more instructions further cause the network device to:
   receive telemetry data from the 3GPP access devices and the non-3GPP access devices via the second interface;
   provide the telemetry data to the NWDAF and via the first interface to cause the NWDAF to calculate additional analytics data based on the telemetry data;
   receive the additional analytics data from the NWDAF and via the first interface; and
   perform one or more additional actions based on the additional analytics data.
17. The computer-readable medium of clause 16, wherein the telemetry data includes protocol buffer structured messages in a universal key/value format.
18. The computer-readable medium of clause 16 or 17, wherein the one or more instructions, that cause the network device to receive the telemetry data from the 3GPP access devices and the non-3GPP access devices, cause the network device to one of:
   receive the telemetry data in bulk from the 3GPP access devices and the non-3GPP access devices;
   receive the telemetry data in chunks from the 3GPP access devices and the non-3GPP access devices; or
   periodically receive portions of the telemetry data from one or more of the 3GPP access devices and the non-3GPP access devices.
19. The computer-readable medium of any of clauses 15 to 18, wherein the one or more instructions further cause the network device to:
   establish the first interface with a network exposure function of the SBA.
20. The computer-readable medium of any of clauses 15 to 19, wherein the one or more instructions, that cause the network device to perform the one or more actions, cause the network device to one or more of:
   calculate a service experience;
   adjust a load on a network function;
   correct a network performance issue,
   correct a user equipment performance issue,
   handle network congestion,
   address a quality of service sustainability issue, or
   handle session management congestion.

## Claims

1. A method, comprising:
establishing, by a network device, a first interface with a network data analytics function, NWDAF, of a service-based architecture, SBA;
establishing, by the network device, a second interface with Third Generation Partnership Project, 3GPP, access devices and non-3GPP access devices;
providing, by the network device, to the NWDAF, and via the first interface, definitions of analytics data to be generated by the NWDAF;
providing, by the network device, to the NWDAF, and via the first interface, raw data of an operational state of the SBA to cause the NWDAF to calculate the analytics data based on the definitions and the raw data of an operational state;
receiving, by the network device, the analytics data from the NWDAF and via the first interface; and
performing, by the network device, one or more actions based on the analytics data.

2. The method of claim 1, further comprising:
receiving telemetry data from the 3GPP access devices and the non-3GPP access devices via the second interface;
providing the telemetry data to the NWDAF and via the first interface to cause the NWDAF to calculate additional analytics data based on the telemetry data;
receiving the additional analytics data from the NWDAF and via the first interface; and
performing one or more additional actions based on the additional analytics data.

3. The method of claim 2, wherein the telemetry data includes protocol buffer structured messages in a universal key/value format.

4. The method of claim 2 or 3, wherein receiving the telemetry data from the 3GPP access devices and the non-3GPP access devices comprises one of:
receiving the telemetry data in bulk from the 3GPP access devices and the non-3GPP access devices;
receiving the telemetry data in chunks from the 3GPP access devices and the non-3GPP access devices; or
periodically receiving portions of the telemetry data from one or more of the 3GPP access devices and the non-3GPP access devices.

5. The method of claim 2, 3 or 4, wherein the additional analytics data includes one or more of:
network data analytics data,
network function load analytics data,
network performance analytics data,
user equipment related analytics data,
congestion analytics data,
quality of service sustainability analytics data,
session management congestion experience analytics data,
redundant transmission experience related analytics data,
end-to-end data volume transfer time analytics data, or
protocol data unit session traffic analytics data.

6. The method of any preceding claim, wherein the first interface is an SBA application programming interface.

7. The method of any preceding claim, further comprising:
establishing the first interface with a network exposure function of the SBA.

8. A network device, comprising:
one or more memories; and
one or more processors to:
establish a first interface with a network data analytics function, NWDAF, of a service-based architecture, SBA,
wherein the first interface is an SBA application programming interface;
establish a second interface with Third Generation Partnership Project, 3GPP, access devices and non-3GPP access devices;
provide to the NWDAF, and via the first interface, definitions of analytics data to be generated by the NWDAF;
provide to the NWDAF, and via the first interface, raw data of an operational state of the SBA to cause the NWDAF to calculate the analytics data based on the definitions and the raw data of an operational state;
receive the analytics data from the NWDAF and via the first interface; and
perform one or more actions based on the analytics data.

9. The network device of claim 8, wherein the second interface is a socket interface based on user datagram protocol/Internet protocol.

10. The network device of claim 8 or 9, wherein the 3GPP access devices and the non-3GPP access devices include one or more of:
a radio access network,
a wireline access gateway function,
a non-3GPP interworking function,
a trusted non-3GPP gateway function, or
a trusted wireless local area network interworking function.

11. The network device of claim 8, 9 or 10, wherein the analytics data includes one or more of:
network data analytics data,
network function load analytics data,
network performance analytics data,
user equipment related analytics data,
congestion analytics data,
quality of service sustainability analytics data,
session management congestion experience analytics data,
redundant transmission experience related analytics data,
end-to-end data volume transfer time analytics data, or
protocol data unit session traffic analytics data.

12. The network device of any of claims 8 to 11, wherein the one or more processors, to perform the one or more actions, are to one or more of:
calculate a service experience;
adjust a load on a network function;
correct a network performance issue,
correct a user equipment performance issue,
handle network congestion,
address a quality of service sustainability issue, or
handle session management congestion.

13. The network device of any of claims 8 to 12, wherein the network device is an access network data function.

14. The network device of any of claims 8 to 13, wherein the definitions of analytics data are based on use cases associated with the SBA.

15. A computer-readable medium storing a set of instructions, the set of instructions comprising:
one or more instructions that, when executed by one or more processors of a network device, cause the network device to:
establish a first interface with a network data analytics function, NWDAF, of a service-based architecture, SBA;
establish a second interface with Third Generation Partnership Project, 3GPP, access devices and non-3GPP access devices,
wherein the second interface is a socket interface based on user datagram protocol/Internet protocol;
provide to the NWDAF, and via the first interface, definitions of analytics data to be generated by the NWDAF;
provide to the NWDAF, and via the first interface, raw data of an operational state of the SBA to cause the NWDAF to calculate the analytics data based on the definitions and the raw data of an operational state;
receive the analytics data from the NWDAF and via the first interface; and
perform one or more actions based on the analytics data.
